# FASCICULE DE BREVET EUROPEEN

(11) **EP 0 404 676 B1**
(45) Date de publication et mention de la délivrance du brevet: **29.12.1993**
(21) Numéro de dépôt: 90401750.6
(22) Date de dépôt: 21.06.1990
(51) Int. Cl.: C03B 23/023, C03B 23/03, C03B 23/035, C03B 27/00, C03B 27/04, C03B 23/025

(54) **Procédé et dispositif pour le bombage et la trempe par contact**
Verfahren und Vorrichtung zum Biegen und Härten durch Kontakt
Method and apparatus for bending and tempering by contact

(30) Priorité: 22.06.1989 FR 8908310
(43) Date de publication de la demande: 27.12.1990
(73) Titulaire: SAINT-GOBAIN VITRAGE INTERNATIONAL, 92400 Courbevoie (FR)
(72) Inventeur: Vanaschen, Luc, B-4700 Eupen (BE); Kuster, Hans-Werner, D-5100 Aachen (DE); Promper, Hans-Josef, D-5100 Aachen (DE); D'Iribarne, Benoit, Laidon-Pasildon, Essex SS 15 6 EE (GB)
(74) Mandataire: Menes, Catherine

(56) Documents cités:
- EP-A- 0 143 691
- EP-A- 0 183 418
- EP-A- 0 277 074
- EP-A- 0 298 426
- EP-A- 0 312 441
- US-A- 4 508 556

## Description

La présente invention concerne le bombage et la trempe par contact de feuilles de verre notamment pour la production de vitrages destinés par exemple à des véhicules automobiles devant posséder une très grande précision de forme, en cas de bris une fragmentation conforme aux normes de sécurité et une qualité optique satisfaisant également les normes les plus sévères.

Il est connu par exemple de la demande de brevet EP-A-277074 de procéder simultanément au bombage et à la trempe de feuilles de verre qui sont pour ce faire échauffées préalablement au-delà de leur température de déformation plastique et amenées entre deux plaques de refroidissement et de compression dont le galbe correspond à la courbure que l'on souhaite conférer à la feuille de verre. Les feuilles de verre sont pressées entre les plaques jusqu'à ce que leur température soit suffisamment basse pour que leur forme soit figée. Un tel procédé est particulièrement avantageux pour les vitrages en verre mince, par exemple de moins de 3 mm d'épaisseur, qu'il est difficile d'amener après bombage à une température suffisamment élevée pour une trempe thermique ; ceci en raison de la rapidité de leur refroidissement à l'air dès que les vitrages en verre mince sortent du four de réchauffage.

Une autre raison du développement de tels procédés de bombage-trempe par contact est le souci d'une parfaite maîtrise de la courbure d'un vitrage, notamment la suppression des défauts dits de double-bombage, c'est-à-dire les courbures non désirées, dues notamment à l'action de la pesanteur lorsque la feuille de verre n'est pas soutenue en tout point de sa face inférieure.

Toutefois, les auteurs de la présente invention ont observé un léger écart du galbe de la feuille de verre par rapport à celui des plaques de refroidissement et de compression dont l'origine est en partie due à la relaxation incomplète des contraintes de formage, et plus précisément des contraintes de flexion. Ces contraintes de flexion sont maximales au voisinage des surfaces du verre - c'est-à-dire qu'elles sont maximales aux endroits les plus rapidement refroidis et donc pour lesquels est minimale la période pendant laquelle la relaxation des contraintes peut effectivement se produire. Par ailleurs, la non relaxation des contraintes peut entraîner localement des tensions supérieures à la résistance du verre et le bris du vitrage.

Il est possible d'allonger cette période pendant laquelle cette relaxation peut se produire en procédant avec des feuilles de verre dont la température initiale est plus grande et qui donc subissent un refroidissement de plus grande intensité. Toutefois, il existe en terme de qualité optique une limite à l'échauffement initial de la feuille de verre. En effet, si les feuilles de verre sont transportées à plat sur des rouleaux - ce qui est à la fois le mode de transport le plus simple, le plus économique et en grande partie le moins susceptible d'entraîner des marquages ou des salissures par les émaux - le verre trop chaud a une légère tendance à s'affaisser entre les rouleaux ce qui crée des défauts de type "tôle ondulée" dont la trace persiste même après le pressage lors de l'étape de bombage-trempe par contact.

Par ailleurs, avec le procédé de bombage-trempe par contact il n'est pratiquement pas possible d'allonger la phase de formage en procédant par exemple à un pliage progressif des formes de bombage - ceci bien sûr du fait que le temps de formage est compté dans la mesure où la feuille de verre subit simultanément un intense refroidissement par les plaques de refroidissement et de compression. L'utilisation de matériaux tampons adéquats apporte une solution à ce problème, mais uniquement si on reste dans le cas de vitesses de pressage usuelles pour une trempe par contact. En fait, si le temps de formage imparti est trop long, à la fin du formage il se produit une casse car le verre est alors trop froid pour supporter le taux de déformation. Cette limitation du temps de formage entraîne une limitation des courbures susceptibles d'être conférées par ce procédé. De plus dans l'absolu, allonger la phase de formage réduit la cadence de fonctionnement de la ligne de production ce qui est toujours un défaut pour un usage industriel.

D'autre part, on connaît de nombreux procédés de fabrication de vitrages bombés et trempés dans lesquels ces deux opérations sont effectuées en des temps et des lieux distincts, notamment des procédés selon lesquels les feuilles de verre sont chauffées en position horizontale dans un four qu'elles traversent par exemple véhiculées par un convoyeur formé par des rouleaux puis sont soulevées au-dessus du convoyeur par des moyens mécaniques ou de nature pneumatique - notamment pas aspiration ou par soufflage d'air chaud - appliquées contre un élément supérieur plat ou constituant une forme de bombage puis relâchées sur un élément inférieur, par exemple un anneau ouvert en son centre, qui conduit la feuille de verre jusqu'à un dispositif de trempe thermique par soufflage d'air froid au moyen de caissons de trempe. Selon les cas, le formage de la feuille de verre s'opère exclusivement sur l'élément inférieur, partiellement ou est déjà achevé lorsque le verre est déposé sur l'élément inférieur. Il est aussi connu des procédés qui n'utilisent pas d'élément inférieur - ou seulement pour l'étape de bombage - et selon lesquels le transfert de la feuille de verre bombée jusqu'au dispositif de trempe s'opère directement sur la forme supérieure qui est alors mobile ou encore sur un convoyeur formé d'un lit de rouleaux éventuellement courbes. A ces procédés de bombage-trempe ayant pour caractéristique commune l'usage d'un élément supérieur et le déplacement vertical de la feuille de verre, il faut encore ajouter les procédés de bombage selon lesquels on fait progresser la feuille de verre sur un lit de conformation, constitué par exemple par des guidons ou des tiges droites montées selon un chemin courbe. Tous les procédés mentionnés ci-dessus sont bien connus de l'art et on pourra en trouver des exemples dans les publications de brevet US-A-3527589, EP-A-3391, EP-A-5306, FR-A-2085464, FR-A-2312463, FR-A-2442219, FR-A-2549464, FR-A-2549465, FR-A-2554436, FR-A-2567508, FR-A-2596750, FR-A-2596751.

Il est notamment connu de la publication EP-A2-183 418 un procédé de formage de feuilles de verre comportant un lâcher de la feuilles de verre sur un cadre de formage suivi d'un pressage au moyen d'une forme pleine supérieure aspirante. Le pressage terminé, la feuille de verre, maintenue par aspiration au contact de la forme supérieure, est soulevée puis déposée sur un nouveau cadre qui la conduit au poste de trempe.

De la publication EP-A1-143 691, il est par ailleurs connu un procédé de bombage sur rouleaux, un pressage étant opéré après une première phase de conformation sur un lit d'éléments tournants, la feuille de verre bombée étant finalement conduite par d'autres éléments tournants jusqu'au poste de trempe.

Ces procédés permettent d'atteindre des cadences très élevées même pour des formes de vitrage relativement complexes, toutefois dans le mesure où la priorité est systématiquement donnée à la qualité optique, il est pratiquement impossible d'obtenir une parfaite conformité au galbe et notamment d'éviter le défaut de double-bombage. Il faut noter que les écarts du galbe sont d'autant plus sensibles que l'épaisseur de la feuille de verre est faible, ce qui explique l'intérêt accru des procédés de bombage-trempe par contact pour du verre mince.

La présente invention a pour but premier une amélioration aux procédés de bombage-trempe par contact telle qu'il soit possible d'obtenir dans des conditions suffisamment industrielles des vitrages pouvant présenter tous les types de courbures, notamment celles se traduisant par des petits rayons de courbure, et ceci avec une très grande précision du galbe.

La solution à ce problème proposée par l'invention consiste en une opération de préformage dans une ambiance chaude, avant de procéder à l'opération de bombage et de trempe simultanée par contact. Par ambiance chaude, on entend ici que le préformage doit être mené dans des conditions telles que la température des feuilles de verre soit égale à leur température de bombage-trempe lorsqu'elles sont conduites entre les plaques de refroidissement et de compression.

Avantageusement, dans toutes les directions de la feuille de verre, l'écart entre la courbure définitive souhaitée par la feuille de verre et sa courbure initiale conférée par le préformage est en tout point de la feuille de verre inférieur à 1 m⁻¹; rappelons que la courbure en un point donné de la feuille de verre est égale par définition à l'inverse du rayon de courbure en ce point. Autrement dit, quelle que soit la forme choisie, l'opération de bombage-trempe par contact peut être effectuée à la même vitesse que l'opération de bombage-trempe pour une feuille de verre plane à laquelle est conférée un rayon de courbure d'au moins 1 mètre. Le préformage a donc pour but d'approcher grossièrement la courbure définitive surtout aux endroits où sont localisés les petits rayons de courbure. Il peut ainsi être effectué de façon extrêmement rapide, sans se préoccuper de l'éventuelle formation de courbures parasitaires qui seront rattrapées lors de la phase de pressage de l'opération de bombage-trempe par contact mais en veillant absolument à ne pas induire de défauts optiques, pendant la phase de préformage ou pendant la phase de transfert jusqu'au dispositif de bombage-trempe par contact.

Cette phase ultérieure de rattrapage de la courbure donne une très grande souplesse au procédé selon l'invention. Dans la mesure où l'écart entre les courbures reste toujours inférieur à 1 m⁻¹ par exemple, il importe peu que la feuille de verre perde pendant le transfert un peu de la courbure qui lui a été conférée au cours du préformage - ou en acquiert une supplémentaire. De ce fait, le transfert peut être obtenu au moyen d'un convoyeur à coussin d'air (qui ne peut entraîner de défauts optiques), d'un convoyeur à rouleaux éventuellement en forme ou d'un tapis métallique constitué par une bande flexible formée d'un tissu ou d'un tricot en fibres métalliques résistantes à la chaleur, présentant une résistance au passage de la chaleur mesurée perpendiculairement au plan de la bande comprise entre 0,25 x 10⁻³ et 5 x 10⁻³ m².K.W⁻¹, ladite bande flexible s'intercalant entre la feuille de verre et la plaque inférieure de compression et de refroidissement.

En substitution de ces convoyeurs, on peut également utiliser directement les éléments de conformation servant au préformage, que ce soit un lit de conformation conférant progressivement une courbure au verre ou que ce soit des éléments contre lesquels on applique la feuille de verre notamment des formes de pressage mâle ou femelle, pleines ou constituées par des anneaux ouverts en leur centre. En règle générale, les éléments de pressage - qui sont associés à des forces de nature mécaniques ou pneumatiques - sont préférés selon l'invention - car ils conviennent bien à l'obtention de petits rayons de courbure. Le pressage par un courant ascendant d'air chaud est plus particulièrement préféré, mais on peut également avoir un "pressage par aspiration", c'est-à-dire que la feuille de verre est plaquée contre l'élément supérieur en forme par une aspiration créée par exemple au voisinage de la périphérie de la feuille de verre ou à proximité de la surface dudit élément supérieur.

Parmi tous les procédés énumérés ci-dessus, mention spéciale doit être faite à ceux qui, au stade final du bombage et donc ici du préformage, amènent la feuille de verre sur un support annulaire sur lequel reposent les bords de la feuille de verre. Dans ces cas, la partie centrale de la feuille de verre - qui après le montage du vitrage sur un véhicule est le plus souvent la seule visible - ne risque pas d'être marquée. De plus, on sait que si les vitrages sont revêtus d'une couche d'émaillage, celle-ci est toujours tournée vers l'intérieur du véhicule, côté le moins exposé aux intempéries ; autrement dit les émaux -qui lors du bombage sont partiellement à l'état fondu avec un fort risque de souillures - sont sur la face concave du vitrage et non sur sa face convexe qui elle repose sur le support annulaire. Par ailleurs, ce cadre annulaire peut fort bien être utilisé pour transférer les feuilles de verre du dispositif de préformage au dispositif de bombage-trempe par contact - comme il est connu pour les procédés de trempe thermique avec des caissons de soufflage d'air froid, avec de plus dans le cas particulier de l'invention, l'avantage de donner une très grande précision de la position de la feuille de verre par rapport aux plaques de refroidissement et de compression, précision qui est une des conditions de l'obtention de vitrages parfaitement conformes au galbe.

Comme indiqué précédemment, un aspect essentiel du préformage avant l'opération de bombage-trempe est la possibilité de réduire dans tous les cas la déformation que subit le verre entre les plaques de refroidissement et de compression à une déformation correspondant à une courbure de moins de 1 m⁻¹. Il est ainsi possible d'obtenir des vitrages de tout rayon de courbure, alors qu'en l'absence de préformage, les rayons de courbure mini sont voisins de 0,85 m - ou même supérieurs pour une plus grande qualité optique.

Corollairement ce préformage permet une réduction importante du temps de formage entre les presses de refroidissement et de compression et par là une augmentation des cadences de production, notamment en autorisant une accélération de la vitesse de pressage dans la mesure où la phase de bombage peut être brève.

Un autre avantage important est qu'il est possible de procéder à l'étape de bombage et de trempe par contact avec des feuilles de verre dont la température initiale est relativement basse, ce qui limite au maximum les risques de formation de défauts optiques. Par température basse, on entend ici une température inférieure à 650°C et de préférence à 630°C, mais bien sur au-delà de la température de déformation plastique de la feuille de verre de façon à pouvoir donner le complément de courbure.

Par ailleurs, le procédé selon l'invention convient particulièrement bien à un des modes de mise en oeuvre décrit dans la demande de brevet déjà citée EP-A-277 074, à savoir celui selon lequel on choisit d'opérer un bombage-trempe par contact au moyen de plaques de refroidissement plus petites que les feuilles de verre. Le choix d'une telle façon de procéder est particulièrement avantageux dans le cas de vitrages de grandes dimensions, car avec des dimensions de vitrages croissantes, la construction des plaques de refroidissement galbées adéquates suscite de plus en plus de difficultés. En outre, il devient de plus en plus difficile de produire la pression de compression uniforme nécessaire et d'évacuer les quantités de chaleur croissantes par le refroidissement desdites plaques. Notons de plus que ce procédé préféré permet l'emploi d'un cadre de transfert du vitrage qui reste en place lors de la trempe par contact.

Une autre difficulté bien connue à laquelle des plaques de refroidissement et de compression plus petites que la feuille de verre peuvent apporter un remède satisfaisant est celle posée par les vitrages dont les régions marginales sont couvertes par des émaux destinés à former une couche opaque formant encadrement et masquant par exemple la colle utilisée pour le montage du vitrage sur le véhicule. Il va de soi que les difficultés détaillées plus haut en référence au préformage se retrouvent à l'identique et l'avantage de procéder avec des plaques de refroidissement et de compression qui ne recouvrent pas ces zones marginales émaillées est de ce point de vue parfaitement évident.

Le défaut majeur du mode de réalisation enseigné par EP-A-277074 est bien sûr le fait que la partie du vitrage extérieure n'est pas soumise à la compression et n'est donc pas directement bombée, encore qu'à condition que les parties extérieures ne représentent qu'une fraction assez faible de la surface et que la viscosité du verre ne soit pas trop faible, la raideur du verre est suffisante pour que ces zones suivent en partie du moins la courbure conférée à la partie centrale. Avec une phase de formage anticipée conformément au procédé selon l'invention, il devient possible de conférer même à ces zones marginales la courbure souhaitée, et ceci sans risquer d'endommager les parties émaillées et/ou de souiller les plaques de refroidissement par les émaux.

Il peut être avantageux de préformer de tels vitrages émaillés en utilisant un support annulaire en forme qui sert de forme de pressage et/ou d'outil de transfert jusqu'au dispositif de bombage-trempe comportant des plaques de refroidissement et de compression plus petites que les feuilles de verre - et en association avec ce dispositif, un dispositif de soufflage d'air froid sur les zones marginales du vitrage. On peut opérer avec un cadre qui présente une surface de support de la feuille de verre discontinue, pour une meilleure évacuation de l'air froid soufflé - ce qui privilégie la qualité de la trempe - ou avec un cadre continu - ce qui est synonyme d'une meilleure qualité optique dans le mesure où on évite ainsi les défauts qui peuvent être générés lors du pressage éventuel pendant la phase de préformage, cadre qui est alors évacué juste avant de procéder au soufflage le long des zones marginales.

Au sens strict, la notion selon l'invention de préformage ne s'applique bien sûr que dans le cas de la production de vitrages présentant une courbure non nulle. Toutefois un des nombreux avantages du préformage est qu'il permet d'optimiser les températures de surface des feuilles de verre. En effet, les auteurs de la présente invention ont constaté que cette notion pouvait être dans une certaine mesure étendue même au cas des vitrages plans. En effet, il a été constaté que toute dissymétrie, même petite, entre les températures des deux faces opposées de la feuille de verre suffit à entraîner après le trempe un certain écart par rapport au galbe attendu, le côté initialement le plus froid correspondant au côté convexe du vitrage. Le préformage devient de ce point de vue très intéressant, soit pour conférer au volume une courbure inverse qui sera compensée lors de l'opération de trempe par contact, soit plus simplement pour ne constituer qu'une simple phase de conditionnement thermique de la feuille de verre. Les fours souvent utilisés ont par exemple tendance à chauffer plus la face supérieure de la feuille de verre que la face inférieure qui est en partie cachée par les rouleaux qui supportent le verre, on peut donc chercher à compenser la différence de température entre les faces par un apport spécifique de chaleur réservé à la face inférieure, apport qui peut être obtenu par exemple par un courant d'air chaud ascendant exerçant une pression dynamique uniforme. Une même ligne de production peut ainsi être utilisée pour tous les types de vitrages.

Comme il est expliqué plus haut, la plupart des dispositifs de bombage connus de l'art conviennent à la mise en oeuvre de l'invention. Une ligne de production conçue pour le procédé selon l'invention est donc essentiellement formée d'un four, d'un poste de bombage "à chaud" sans refroidissement de trempe, d'un poste de bombage-trempe par contact et de moyens de transfert des feuilles de verre entre les deux dispositifs de bombage.

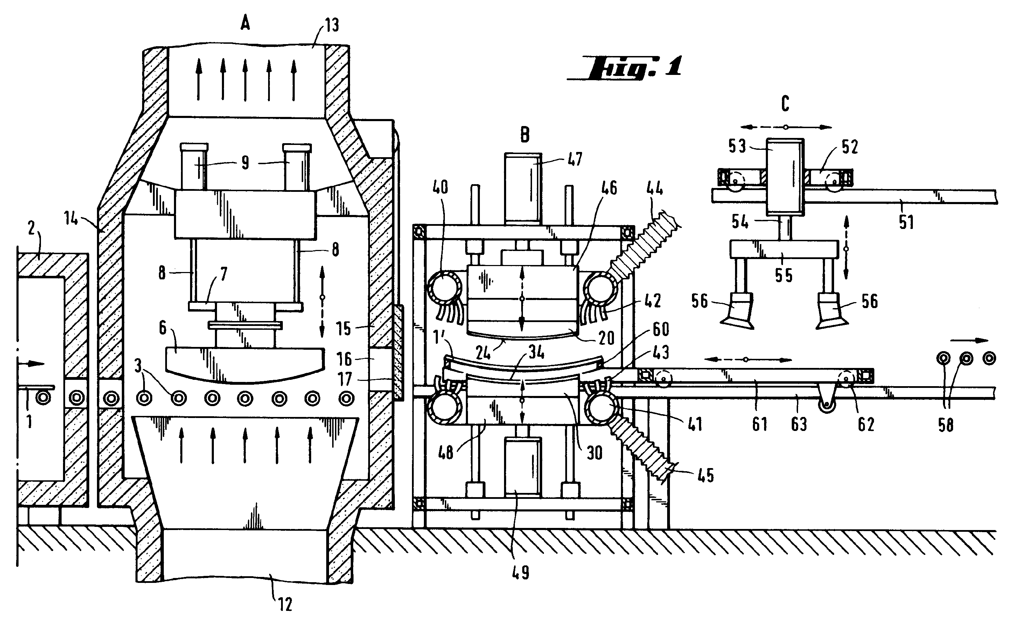

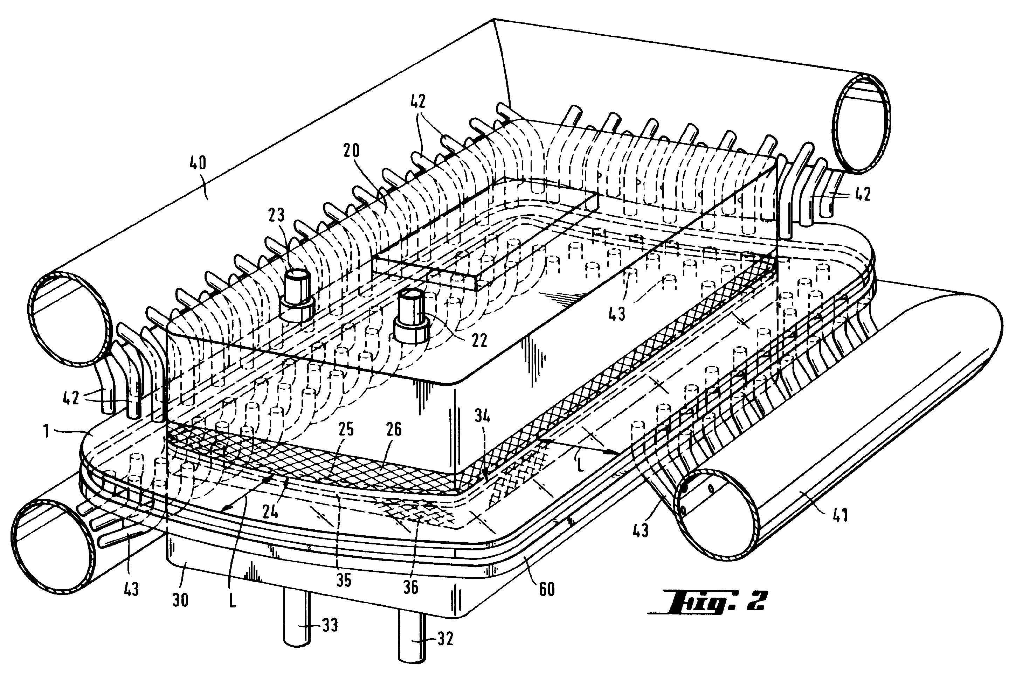

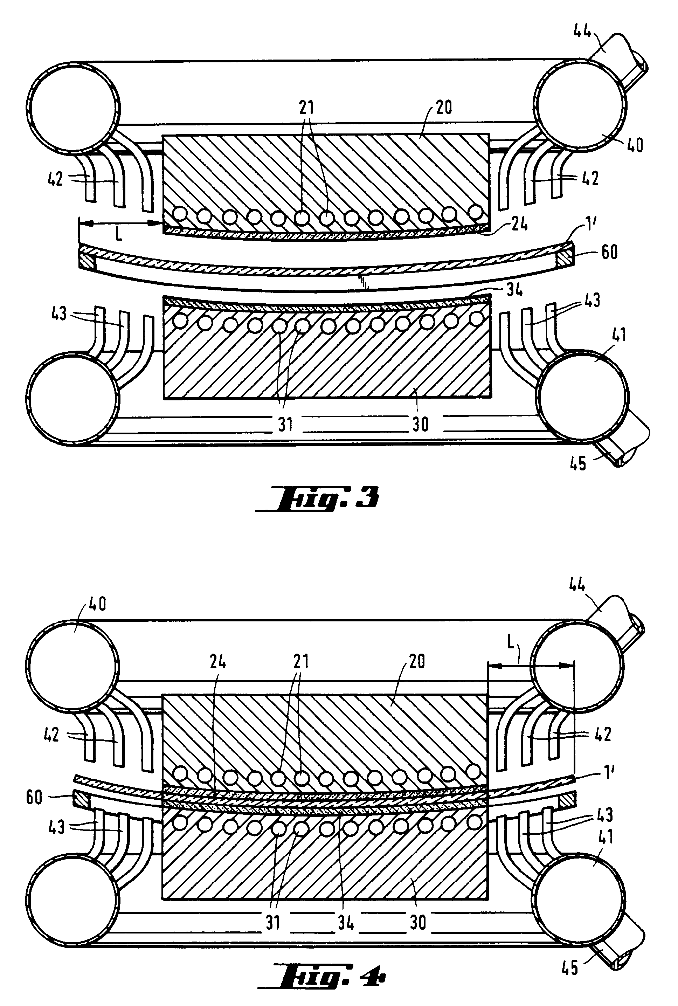

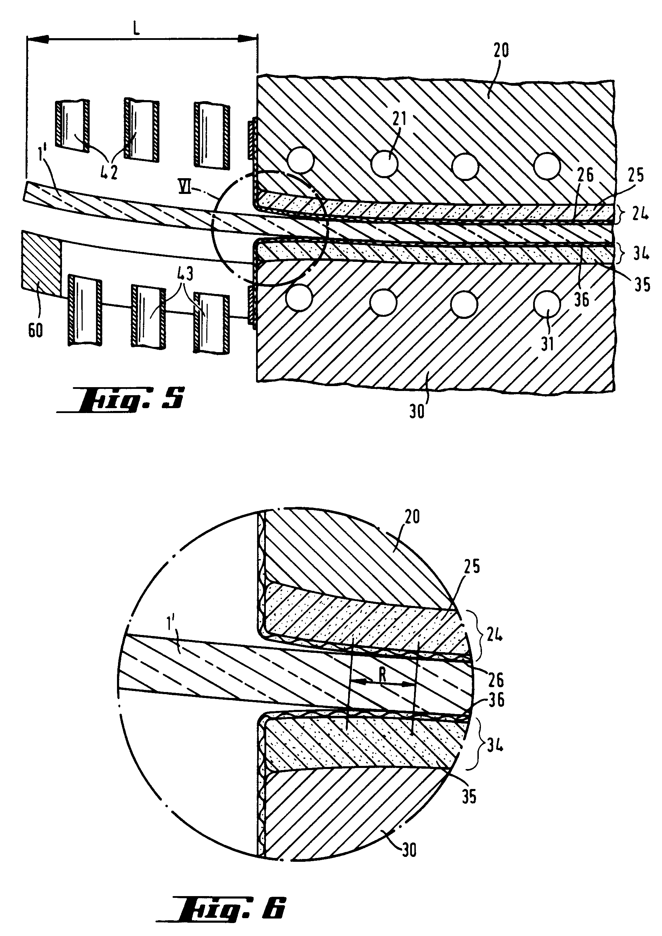

Dans certains cas, il est toutefois avantageux d'utiliser le dispositif spécifique décrit ci-après en référence aux dessins annexés qui représentent :
. **figure 1** : une vue d'ensemble schématique d'une installation de bombage et de trempe,
. **figure 2** : une vue en perspective des éléments essentiels du poste de compression et de trempe,
. **figure 3** : une vue du poste de compression et de trempe au moment du positionnement du vitrage prébombé,
. **figure 4** : une vue du poste de compression et de trempe au moment de l'opération de compression et de trempe,
. **figure 4** : une vue en coupe illustrant la structure des outils de bombage refroidis,
. **figure 6** : une vue, à plus grande échelle, d'une partie de la figure 5.

Une installation pour l'exécution du procédé conforme à l'invention comprend, comme le montre schématiquement la figure 1, essentiellement trois postes, à savoir un poste de bombage A, un poste de compression et de trempe B et un poste d'évacuation C.

Les vitrages 1 à bomber sont chauffés à la température de bombage dans un four continu 2 d'une manière connue. A l'aide d'un convoyeur constitué par exemple par des moteurs 3, les vitrages chauffés sont transportés au travers du four 2 et jusqu'au poste de bombage A où on procède au préformage.

Dans le cas représenté, l'opération de bombage s'effectue dans le poste de bombage A par le procédé de bombage à air chaud connu de US-A-4682997. Le poste de bombage A comprend à cet effet, une forme supérieure de bombage pleine, convexe 6 installée au-dessus des rouleaux 3. La forme de bombage 6 est fixée à un cadre 7, monté pour sa part sur des tiges 8 qui peuvent être déplacées verticalement à l'aide de dispositifs d'entraînement 9 appropriés, de sorte que la forme de bombage 6 peut être amenée dans la position abaissée représentée aux dessins et dans une position remontée. En-dessous des rouleaux 3 est prévu un conduit d'alimentation 12 par lequel est acheminé de l'air chaud selon un débit volumique prédéterminé et sous une pression prédéterminée, de sorte que le courant d'air chaud ascendant soit dirigé vers la forme supérieure 6. Après avoir traversé la chambre de bombage, le courant d'air chaud sort par le canal 13 et est ensuite recyclé dans le conduit 12.

Au moyen du flux de gaz chaud, le vitrage 1 est pressé contre la surface de moulage du moule de bombage 6 et prend ainsi la forme qui est prédéfinie par celle-ci. La chambre de bombage proprement dite est entourée par une enceinte 14. La paroi 15 de l'enceinte 14 présente une ouverture 16 qui est fermée par une porte 17 pendant l'opération de bombage.

Le poste de compression et de trempe B comprend un moule 20 supérieur convexe refroidi par exemple à l'eau et un moule 30 inférieur concave de même refroidi. Les deux moules 20 et 30 définissent une surface plus petite que celle du vitrage 1'. Les deux moules sont entourés par des conduits annulaires, respectivement notés 40 et 41 pour la distribution d'air froid. Les conduits 40, 41 comprennent respectivement des buses de soufflage 42, 43 dirigées vers les régions marginales du vitrage 1'. Les conduits 40 et 41 sont alimentés en air par l'intermédiaire de flexibles de soufflage froid d'alimentation 44 et 45.

Le moule supérieur 20 est installé conjointement avec le conduit annulaire 40 sur un cadre 46 dont la position verticale est commandée à l'aide du vérin pneumatique ou hydraulique 47. De même, le moule inférieur 30 est installé conjointement avec le conduit annulaire 41 sur un cadre commun 48, dont la position verticale est commandée à l'aide du vérin pneumatique ou hydraulique 49.

Le poste de transfert C comprend essentiellement un chariot 52 qui se déplace sur des rails 51 parallèles à l'axe de direction de transport des feuille de verre. Le chariot 52 porte un vérin pneumatique 53 ; sur la tige de piston 54 du vérin 53 est fixé un cadre 55 auquel sont suspendues des ventouses 56. A l'aide de ce dispositif de transfert, les vitrages sont saisis après la trempe par les ventouses 56, soulevés et déposés sur un convoyeur transporteur à rouleaux 58. Ce convoyeur à rouleaux 58 transporte les vitrages sur une distance de postrefroidissement telle que les vitrages sont à température ambiante à l'extrémité du convoyeur 58.

Le transfert du vitrage 1' depuis le poste de bombage A jusqu'au poste de transfert C s'effectue au moyen d'un cadre annulaire 60 correspondant à la forme du vitrage bombé. Le cadre 60 est monté sur un chariot 61 pourvu de roues 62 qui roulent sur des rails 63 parallèles aux rails 51.

La construction des outils de compression et de trempe et leur mode de fonctionnement ressortent dans le détail des figures 2 à 6. Le moule supérieur 20, qui assure simultanément la compression, le refroidissement brusque de la zone centrale pour la trempe du vitrage 1', est constitué par un corps métallique pourvu de canaux 21 traversés par de l'eau de refroidissement. On peut également utiliser pour réaliser les plaques de refroidissement tout matériau à faible valeur du rapport coefficient de dilatation linéaire sur conductivité thermique, notamment de graphite comme indiqué dans la demande de brevet EP-A-312441. L'eau de refroidissement est admise par un tuyau flexible 22 et évacuée par le tuyau flexible 23. Sur la surface de moulage proprement dite, le moule 20 est pourvu d'une couche 24. La couche 24 est faite d'une matière qui, dans une faible mesure, possède une déformabilité élastique lui permettant de s'appliquer de manière optimale par toute sa surface sur la surface du verre, et qui possède d'autre part de bonnes propriétés de conductibilité thermique. La couche 24 peut, par exemple, être faite d'une plaque de graphite lamellaire d'environ 1 à 2 mm d'épaisseur, disponible sous la marque commerciale SIGRAFLEX (marque déposée de la société SIGRA GMBH constituée selon le droit de la république fédérale allemande). Comme le montrent les figures 5 et 6, cette plaque de graphite lamellaire 25 est recouverte et retenue par une mince toile métallique 26 qui pour sa part est fixée aux parois latérales du moule 20. La toile métallique 26 est également constituée d'un métal possédant une conductance thermique adéquate - comme il est indiqué dans la demande de brevet EP-A-312441 précitée - et qui présente une épaisseur faible comprise par exemple entre 0,1 à 0,3 mm.

Le moule inférieur 30 est construit d'une manière analogue. Il est également pourvu de canaux 31 qui sont traversés par de l'eau de refroidissement. L'eau de refroidissement est admise par le tuyau flexible 32 et évacuée par le tuyau flexible 33. La surface du corps métallique du moule de compression 30 est à nouveau pourvue d'une couche élastiquement flexible 34, qui est faite d'une plaque de graphite lamellaire 35 recouverte d'une toile métallique 36.

Les moules 20 et 30 ont une étendue en surface qui est inférieure à celle du vitrage 1' dans une mesure telle que la largeur L de la région marginale du vitrage dépassant latéralement des moules soit de 1 à 10 cm. Dans cette région marginale, le vitrage 1' est trempé au moyen de jets d'air froid sortant des buses de soufflage 42 et 43.

Pour éviter des déformations du vitrage 1' au niveau du bord des moules 20 et 30, les surfaces de moulage des moules présentent au niveau de leurs bords, chaque fois un rayon de courbure différent de celui du vitrage 1', comme le montrent clairement les figures 5 et 6. La pression de compression est ainsi toujours abaissée jusqu'à zéro dans une région de transition R, ce qui exclut tout risque de déformation du vitrage en cet endroit. En outre - il ressort plus précisément de la figure 4, pendant l'opération de compression et de trempe proprement dite, le vitrage 1' est légèrement soulevé du cadre de moulage 60, de sorte que le cadre de moulage 60 ne transmet, pendant cette opération, aucune force, éventuellement perturbatrice, au vitrage 1'.

Le vitrage 1' est soulevé du cadre de moulage 60 par le moule inférieur 30 qui est élevé par le vérin 49. En variante ou en outre, le cadre de moulage 60 peut également être monté mobile vers le haut et vers le bas, de sorte que le vitrage 1' peut être déposé sur le moule inférieur 30 par abaissement du cadre de moulage 60 et que, lorsque le vitrage 1' a été pris en charge par le moule de recompression inférieur 30, le cadre de moulage 60 se sépare du vitrage 1' par un abaissement supplémentaire.

Le procédé exécuté à l'aide du dispositif décrit ci-dessus se déroule de la manière suivante.

Le vitrage 1 chauffé à la température de bombage pénètre dans la chambre de bombage 14. Pendant ce temps, l'ouverture 16 est fermée par la porte 17. Le moule de bombage 6 vient occuper sa position d'extrémité inférieure dans laquelle il se trouve un peu au-dessus du plan de transport des feuilles de verre. Le vitrage est positionné en-dessous du moule de bombage 6. Le courant d'air chaud par lequel le vitrage est pressé contre la surface de bombage du moule de bombage 6 est alors enclenché.

Tout en maintenant le courant d'air chaud, le moule de bombage est déplacé dans sa position supérieure avec le vitrage 1'. En même temps, la porte 17 est ouverte ce qui libère la trajectoire du cadre annulaire 60 qui, jusqu'à cet instant se trouvait en dehors de la chambre de bombage. Le chariot 61 portant le cadre annulaire 60 se déplace en direction de la chambre de bombage jusqu'à ce que le cadre 60 se trouve exactement en-dessous du vitrage 1' maintenu contre le moule de bombage 6 par le courant d'air chaud. Le moule de bombage 6 est à présent déplacé en direction du cadre annulaire 60 et le débit volumique du courant d'air chaud est réduit au point que le vitrage 1' se détache du moule de bombage 6 et se dépose sur le cadre annulaire 60.

Dès que le vitrage 1' s'est séparé du moule de bombage 6, celui-ci est à nouveau déplacé vers le haut et le cadre annulaire 60 portant le vitrage 1' bombé est introduit dans le poste de compression et de trempe B. La faible déformation du vitrage 1' qui se produit inévitablement pendant le transport du vitrage bombé chaud, et qui est due à l'affaissement du vitrage dans sa zone centrale sous l'effet de son propre poids, est à présent annulée dans le poste de compression et de trempe. Immédiatement après le positionnement du cadre 60 entre les moules de refroidissement et de compression 20 et 30, ces moules sont déplacés l'un vers l'autre, de sorte que le vitrage 1' est légèrement soulevé du cadre de moulage 60 par le moule inférieur. Par le contact sous pression avec les deux moules refroidis 20 et 30, le vitrage 1' acquiert sa forme finale dans sa zone centrale et est simultanément trempé thermiquement par le refroidissement rapide. En même temps, les conduits de distribution d'air 40 et 41 sont alimentés en air froid, de sorte que la région marginale est également rapidement refroidie et ainsi trempée.

Dès que l'opération de refroidissement est terminée, les deux moules de refroidissement et de compression 20 et 30 sont ramenés dans leur position initiale. De cette façon, le vitrage est libéré. Le chariot 61 avec le vitrage 1' est à présent amené dans le poste de transfert C où le vitrage est soulevé du cadre de moulage 60 et est déposé sur le transporteur à rouleaux 58.

## Revendications

1. Procédé de bombage et de trempe simultanée par contact de feuilles de verre, **caractérisé par** un préformage des feuilles de verre dans une ambiance chaude étant telle que la température des feuilles de verre soit égale à leur température de bombage-trempe lorsqu'elles sont conduites entre les plaques de refroidissement et de compression.

2. Procédé de bombage-trempe par contact selon la revendication 1, **caractérisé en ce que** toutes les opérations sont effectuées alors que les feuilles de verre sont en position horizontale ou sensiblement horizontale.

3. Procédé de bombage-trempe par contact selon la revendication 1 ou 2, **caractérisé en ce que** dans toutes les directions de la feuille de verre, la courbure initiale conférée à la feuille de verre lors du préformage est telle que l'écart entre sa courbure définitive et ladite courbure initiale est inférieur à 1 m⁻¹.

4. Procédé de bombage-trempe par contact selon l'une des revendications 1 à 3, **caractérisé en ce que** la température des feuilles de verre après le préformage est inférieure à 650 C et de préférence à 630 C.

5. Procédé de bombage-trempe par contact selon l'une des revendications précédentes, **caractérisé en ce que** les feuilles de verre préformées sont transférées de la station de préformage à la station de bombage-trempe par contact au moyen d'un des éléments de conformation servant au préformage.

6. Procédé de bombage-trempe par contact selon la revendication 4, **caractérisé en ce que** ledit élément de conformation est un cadre annulaire en forme.

7. Procédé de bombage-trempe par contact selon l'une des revendications précédentes, **caractérisé en ce que** le préformage est obtenu par un pressage.

8. Procédé de bombage-trempe par contact selon la revendication 7, **caractérisé en ce que** le pressage est effectué par un courant ascendant d'air chaud.

9. Procédé de bombage-trempe selon la revendication 7, **caractérisé en ce que** le pressage est obtenu par aspiration.

10. Procédé de bombage-trempe par contact selon la revendication 1 à 5, **caractérisé en ce que** le préformage est obtenu en faisant progresser la feuille de verre sur un lit de conformation.

11. Procédé de bombage-trempe par contact selon l'une ou plusieurs des revendications précédentes, **caractérisé en** **ce que** l'opération de bombage-trempe par contact des feuilles de verre est réalisée en laissant des zones marginales du vitrage qui dépassent les moules de compression et de refroidissement, lesdites zones marginales étant trempées par soufflage de jets d'air froid.

12. Procédé suivant la revendication 11, **caractérisé en** **ce que** la région marginale ou la bande marginale de pourtour à tremper par soufflage de jets d'air présente une largeur (L) de 1 à 10 cm.

13. Utilisation du procédé suivant la revendication 1 à 12 pour bomber et tremper des vitrages qui sont pourvus d'un bord décoratif imprimé en émail à cuire.

14. Dispositif pour l'exécution du procédé selon l'une des revendications 1 à 12, **caractérisé par** un four, un poste de bombage (A) "à chaud", un poste de bombage-trempe par contact (B) et des moyens de transfert des feuilles de verre entre les deux dispositifs de bombage.

15. Dispositif pour l'exécution du procédé suivant la revendication 11 ou 12, **caractérisé par** un four, un poste de préformage (A), un cadre annulaire (60) recevant le vitrage bombé (1') et monté sur un chariot déplaçable (61) et un poste de bombage-trempe (B) suivant le poste de préformage dans lequel les outils de compression et de refroidissement sont constitués de deux moules refroidis (20, 30) présentant des dimensions plus petites que celles du vitrage (1') et des buses de soufflage (42, 43) disposées à côté des moules (20, 30) agissant sur les régions marginales du vitrage (1') qui dépassent latéralement des moules et alimentées en air froid au moyen d'un conduit de distribution d'air (40, 41).

16. Dispositif suivant la revendication 15, **caractérisé** **en ce que** les moules refroidis (20, 30) sont pourvus de canaux (21, 31) et sont munis, sur leur surface tournée vers le vitrage (1') d'une couche élastiquement flexible (24, 34) à haute conductibilité thermique.

17. Dispositif suivant la revendication 16, **caractérisé en ce que** la couche élastiquement flexible (24, 34) à haute conductibilité thermique est faite d'une plaque (25, 35) de 1 à 2 mm d'épaisseur de graphite laminaire et d'une toile métallique (26, 36) couvrant le graphite.

18. Dispositif suivant l'une quelconque des revendications 15 à 17, **caractérisé en ce que** les moules (20, 30) présentent, dans leurs régions d'extrémité, un rayon de courbure différent de celui du vitrage (1') dans ces régions, de sorte que les forces de compression exercées sur le vitrage (1') sont toujours ramenées à zéro dans une région de transition (R).

19. Dispositif suivant l'une quelconque des revendications 15 à 18, caractérisé en ce que l'étendue en surface des moules à compression ( 20, 30) est inférieure à celle du vitrage (1') dans une mesure telle qu'une bande marginale de 1 à 10 cm de largeur dépasse latéralement des moules à compression.

20. Application du procédé selon l'une des revendications 1 à 12, à l'obtention de vitrages plats.

## Patentansprüche

1. Verfahren zum gleichzeitigen Kontaktbiegen und -vorspannen von Glasscheiben, **dadurch gekennzeichnet, daß** eine Vorverformung der Glasscheiben in einer derart heißen Umgebung stattfindet, daß die Temperatur der Glasscheiben gleich ihrer Biege- und Abschrecktemperatur ist, wenn sie zwischen die Kühl- und Preßplatten geführt werden.

2. Verfahren zum Kontaktbiegen und -vorspannen nach Anspruch 1, **dadurch gekennzeichnet,** daß sämtliche Arbeitsgänge ausgeführt werden, während sich die Glasscheiben in einer horizontalen oder etwa horizontalen Position befinden.

3. Verfahren zum Kontaktbiegen und -vorspannen nach Anspruch 1 oder 2, **dadurch gekennzeichnet**, daß die der Glasscheibe während der Vorverformung verliehene Anfangskrümmung in sämtlichen Richtungen der Glasscheibe derart ist, daß der Unterschied zwischen ihrer endgültigen und dieser Anfangskrümmung kleiner als 1 m⁻¹ ist.

4. Verfahren zum Kontaktbiegen und -vorspannen nach einem der Ansprüche 1 bis 3, **dadurch gekennzeichnet**, daß die Temperatur der Glasscheiben nach der Vorverformung unter 650 und vorzugsweise unter 630 °C liegt.

5. Verfahren zum Kontaktbiegen und -vorspannen nach einem der vorhergehenden Ansprüche, **dadurch gekennzeichnet,** daß die vorverformten Glasscheiben mittels eines der zur Vorverformung dienenden Formteile von der Vorverformungsstation zur Kontaktbiege- und -vorspannstation transportiert werden.

6. Verfahren zum Kontaktbiegen und -vorspannen nach Anspruch 4, **dadurch gekennzeichnet**, daß dieses Formteil ein ringförmiger Formrahmen ist.

7. Verfahren zum Kontaktbiegen und -vorspannen nach einem der vorhergehenden Ansprüche, **dadurch gekennzeichnet**, daß die Vorverformung mittels Pressen durchgeführt wird.

8. Verfahren zum Kontaktbiegen und -vorspannen nach Anspruch 7, **dadurch gekennzeichnet**, daß das Pressen mit einem aufsteigenden Heißluftstrom durchgeführt wird.

9. Verfahren zum Kontaktbiegen und -vorspannen nach Anspruch 7, **dadurch gekennzeichnet**, daß das Pressen durch Ansaugen durchgeführt wird.

10. Verfahren zum Kontaktbiegen und -vorspannen nach Anspruch 1 bis 5, **dadurch gekennzeichnet**, daß die Vorverformung durchgeführt wird, indem man die Glasscheibe sich auf einem Formgebungsträger fortbewegen läßt.

11. Verfahren zum Kontaktbiegen und -vorspannen nach einem oder mehreren der vorhergehenden Ansprüche, **dadurch gekennzeichnet**, daß der Kontaktbiege- und -vorspann-arbeitsgang der Glasscheiben durchgeführt wird, indem man die Randbereiche der Verglasung beläßt, welche die Preß- und Kühlformen durchlaufen, und diese Randbereiche durch Anblasen von Kaltluftstrahlen abgeschreckt werden.

12. Verfahren nach Anspruch 11, **dadurch gekennzeichnet**, daß das umfängliche Randband oder der umfängliche Randbereich, der mittels Anblasen von Luftstrahlen abzuschrecken ist, eine Breite (L) von 1 bis 10 cm aufweist.

13. Anwendung des Verfahrens nach Anspruch 1 bis 12 zum Biegen und Vorspannen von Verglasungen, die mit einem dekorativen Rand aus einzubrennendem Email bedruckt sind.

14. Vorrichtung zur Durchführung des Verfahrens nach einem der Ansprüche 1 bis 12, **gekennzeichnet durch** einen Ofen, eine "Heiß"biegestation (A), eine Kontaktbiege- und -abschreck-station (B) und Transportmittel für die Glasscheiben zwischen den beiden Biegevorrichtungen.

15. Vorrichtung zur Durchführung des Verfahrens nach Anspruch 11 oder 12, **gekennzeichnet durch** einen Ofen, eine Vorverformungsstation (A), einen Ringrahmen (60), der die gebogene Verglasung (1') aufnimmt und auf einem beweglichen Wagen (61) befestigt ist, und eine nach der Vorverformungsstation befindliche Biege- und Abschreckstation (B), in der die Preß- und Kühlwerkzeuge aus zwei gekühlten Formen (20,30), die kleinere Abmessungen als die Verglasung (1') aufweisen, und Blasdüsen (42,43) bestehen, die an der Seite der Formen (20,30) angeordnet sind, auf die Rand-bereiche der Verglasung (1'), die seitlich die Formen überragen, wirken und mit Kaltluft durch eine Luftverteilungsleitung (40,41) versorgt werden.

16. Vorrichtung nach Anspruch 15, **dadurch gekennzeichnet**, daß die gekühlten Formen (20,30) mit Kanälen (21,31) und auf ihrer zur Verglasung (1') gerichteten Fläche mit einer flexiblen, elastischen Schicht (24,34), die eine hohe Wärmeleitfähigkeit aufweist, versehen sind.

17. Vorrichtung nach Anspruch 16, **dadurch gekennzeichnet**, daß die flexible elastische Schicht (24,34) mit hoher Wärmeleitfähigkeit aus einer laminaren Graphitplatte (25, 35) von 1 bis 2 mm Dicke und einem das Graphit bedeckenden Metallgeflecht (26,36) hergestellt ist.

18. Vorrichtung nach einem der Ansprüche 15 bis 17, **dadurch** **gekennzeichnet,** daß die Formen (20,30) in ihren Randbereichen einen Krümmungsbereich aufweisen, der von dem der Verglasung (1') in diesen Bereichen so verschieden ist, daß die auf die Verglasung (1') ausgeübten Preßkräfte in einem Übergangsbereich (R) immer auf Null gebracht werden.

19. Vorrichtung nach einem der Ansprüche 15 bis 18, **dadurch** **gekennzeichnet,** daß die Oberflächenausdehnung der Preßformen (20,30) derart geringer als die der Verglasung (1') ist, daß ein Randband von 1 bis 10 cm Breite über die Preßformen hinausragt.

20. Anwendung des Verfahrens nach einem der Ansprüche 1 bis 12 zur Herstellung flacher Verglasungen.

## Claims

1. Process for simultaneous bending and toughening by contact of glass sheets, characterized by a preshaping of the glass sheets in a hot environment such that the temperature of the glass sheets is equal to their bending-toughening temperature when they are brought between the cooling and pressing plates.

2. Contact bending-toughening process according to Claim 1, characterized in that all the operations are carried out while the glass sheets are in a horizontal or substantially horizontal position.

3. Contact bending-toughening process according to Claim 1 or 2, characterized in that, in all the directions of the glass sheet, the initial curvature imparted to the glass sheet during the preshaping is such that the difference between its definitive curvature and said initial curvature is less than 1 m⁻¹.

4. Contact bending-toughening process according to one of Claims 1 to 3, characterized in that the temperature of the glass sheets after the preshaping is less than 650°C and preferably less than 630°C.

5. Contact bending-toughening process according to one of the preceding Claims, characterized in that the preshaped glass sheets are transferred from the preshaping station to the contact bending-toughening station by means of one of the shaping elements serving for the preshaping.

6. Contact bending-toughening process according to Claim 4, characterized in that said shaping element is a shaped annular frame.

7. Contact bending-toughening process according to one of the preceding Claims, characterized in that the preshaping is produced by pressing.

8. Contact bending-toughening process according to Claim 7, characterized in that the pressing is carried out by an ascending hot air current.

9. Contact bending-toughening process according to Claim 7, characterized in that the pressing is produced by suction.

10. Contact bending-toughening process according to Claims 1 to 5, characterized in that the preshaping is produced by causing the glass sheet to advance on a shaping bed.

11. Contact bending-toughening process according to one or more of the preceding Claims, characterized in that the operation of bending-toughening by contact of the glass sheets is performed omitting the marginal zones of the pane which project beyond the pressing and cooling moulds, said marginal zones being toughened by blowing of cold air jets.

12. Process according to Claim 11, characterized in that the marginal region or the marginal band of the periphery to be toughened by blowing of air jets has a width (L) of 1 to 10 cm.

13. Use of the process according to Claims 1 to 12 for bending and toughening panes which are provided with a printed decorative edge of baking enamel.

14. Device for carrying out the process according to one of Claims 1 to 12, characterized by a furnace, a "hot" bending station (A), a contact bending-toughening station (B) and means for transferring the glass sheets between the two bending devices.

15. Device for carrying out the process according to Claim 11 or 12, characterized by a furnace, a preshaping station (A), an annular frame (60) receiving the bent pane (1') and mounted on a movable carriage (61) and a bending-toughening station (B) following the preshaping station, in which the pressing and cooling tools are constituted of two cooled moulds (20, 30) having dimensions smaller than those of the pane (1') and blowing nozzles (42. 43) disposed alongside the moulds (20, 30) and acting on the marginal regions of the pane (1') which project laterally beyond the moulds, and supplied with cold air by means of an air distribution duct (40, 41).

16. Device according to Claim 15, characterized in that the cooled moulds (20, 30) are provided with channels (21, 31) and are equipped, on their face towards the pane (1'), with an elastically flexible layer (24, 34) having high thermal conductivity.

17. Device according to Claim 16, characterized in that the elastically flexible layer (24, 34) of high thermal conductivity is made of a plate (25, 35) of 1 to 2 mm thickness of lamellar graphite and of a metal cloth (26, 36) covering the graphite.

18. Device according to any one of Claims 15 to 17, characterized in that the moulds (20, 30) have, in their extreme regions, a radius of curvature different from that of the pane (1') in these regions such that the compressive forces exerted on the pane (1') are always restored to zero in a transition region (R).

19. Device according to any one of Claims 15 to 18, characterized in that the extent of area of the compression moulds (20, 30) is less than that of the pane (1') in such a way that a marginal band of from 1 to 10 cm width projects laterally from the compression moulds.

20. Application of the process according to one of Claims 1 to 12 to the production of flat panes.
